# EUROPEAN PATENT APPLICATION

(11) **EP 4 772 742 A1**
(43) Date of publication of application: **08.07.2026**
(21) Application number: 23950511.8
(22) Date of filing: 06.12.2023
(51) Int. Cl.: F04B 15/08, F04B 53/12

(54) **PISTON LIQUID HYDROGEN PUMP AND HYDROGEN FUELING SYSTEM**

(30) Priority: 30.08.2023 CN 202311109538
(71) Applicant: China Energy Investment Corporation Limited, Beijing 100011 (CN); National Institute of Clean-and-Low-Carbon Energy, Beijing 102211 (CN)
(72) Inventor: ZHANG, Feng, Beijing 102211 (CN); HE, Guangli, Beijing 102211 (CN); LI, Chufu, Beijing 102211 (CN); LI, Xuan, Beijing 102211 (CN); ZHANG, Xin, Beijing 102211 (CN); XIONG, Xue, Beijing 102211 (CN); GAO, Haohua, Beijing 102211 (CN); CAI, Xingye, Beijing 102211 (CN); CUI, Xin, Beijing 102211 (CN); WANG, Xiaohuan, Beijing 102211 (CN); DU, Wandou, Beijing 102211 (CN)
(74) Representative: Forresters IP LLP
(86) International application number: PCT/CN2023/136812
(87) International publication number: WO 2025/043943

(57) **Abstract**

The present application discloses a piston liquid hydrogen pump and a hydrogen fueling system. In the piston liquid hydrogen pump, a first piston is provided in a driving cavity, a first driving liquid inlet/outlet is formed in a first driving cavity, and a second driving liquid inlet/outlet is formed in a second driving cavity; a liquid passing hole making the first driving cavity and the second driving cavity communicated with each other is formed in the first piston, and a mushroom valve assembly is movably provided in the liquid passing hole and seals the liquid passing hole when moving to openings of the liquid passing hole; a second piston is provided in a hydraulic cavity; a piston rod is sealingly connected between the first piston and the second piston, and a liquid hydrogen one-way inlet and a liquid hydrogen one-way outlet are formed in a second hydraulic cavity. The hydrogen fueling system comprises a liquid hydrogen storage tank, a vaporizer, a buffer tank, a liquid hydrogen pipe, a gaseous hydrogen fueling machine, and the piston liquid hydrogen pump. According to the piston liquid hydrogen pump and the hydrogen fueling system provided by the present application, the start and stop of the pistons are mechanically controlled by means of the mushroom valve assembly, so that the failure rate is low, and the stability and the reliability are achieved; and the mushroom valve assembly has a low mass, so that the response speed can be increased, and the control precision can be improved.

## Description

The present application claims the priority of the Chinese patent application filed on August 30, 2023 before China National Intellectual Property Administration with the application number of 202311109538.1 and the title of "PISTON LIQUID HYDROGEN PUMP AND HYDROGEN FUELING SYSTEM", which is incorporated herein in its entirety by reference.

### TECHNICAL FIELD

The present application relates to the field of liquid hydrogen storage and transportation technologies, in particular to a piston liquid hydrogen pump and a hydrogen fueling system.

### BACKGROUD

Liquid hydrogen is more suitable for large-scale long-distance transportation compared to gaseous hydrogen. The liquid hydrogen is also preferable for storage within a large hydrogen refueling station. The liquid hydrogen has high hydrogen storage density, low storage and transportation costs, low storage pressure, and higher safety.

The liquid hydrogen is stored in a container, which operates at an ultra-low temperature (approximately 20K). At such ultra-low temperature, steel becomes brittle and a mechanical strength of the steel decreases; furthermore, under a hydrogen-containing condition, there is a risk of hydrogen corrosion and hydrogen embrittlement. Consequently, maximum allowable pressures of all liquid hydrogen storage tanks under the prior art remain relatively low. However, a hydrogen refueling station that stores liquid hydrogen requires high-pressure gaseous hydrogen to refuel vehicles loaded with compressed hydrogen. Therefore, a high-pressure liquid hydrogen pump is needed to compress the liquid hydrogen to a high pressure, transport the liquid hydrogen to a downstream vaporizer through a pipeline, and then vaporize the liquid hydrogen into high-pressure gaseous hydrogen for use by a hydrogen dispenser. A hydrogen pump is a key device in a liquid hydrogen energy system. The hydrogen pump has very high design standards and manufacturing standards.

Hydrogen pumps in the prior art are generally piston liquid hydrogen pumps, which are categorized as external types and semi-submerged types. The external liquid hydrogen pump is installed outside a liquid hydrogen storage tank and connected to the liquid hydrogen storage tank via a pipeline to convey the liquid hydrogen. A hydraulic end of the semi-submerged liquid hydrogen pump, which undertakes transportation of the compressed liquid hydrogen, is installed inside the storage tank and immersed in the liquid hydrogen, while a driving end of the semi-submerged liquid hydrogen pump is installed outside the liquid hydrogen storage tank.

The inventor has found that the prior art semi-submerged liquid hydrogen pump generally uses sensor control, time control, or shuttle valve control to control a piston. The above three control methods have the following shortcomings. Firstly, for the sensor control, a position sensor or a pressure sensor is generally installed at both ends of a hydraulic driving cylinder, while the position sensor or the pressure sensor has high failure rate and poor reliability. Secondly, for the time control, movement of the piston is largely affected by a hydraulic driving force, making start and stop control of the piston unreliable when only time is considered. Thirdly, for the shuttle valve control, the mass and volume of the shuttle valve are large, so a larger driving force of a hydraulic fluid is required when moving, and a movement speed is slow, leading to delayed control response, prolonged control time, and reduced control precision in controlling the start and stop of the piston.

### SUMMARY

The solutions of the present application aim at providing a piston liquid hydrogen pump and a hydrogen fueling system, so as to solve the problems existing in the prior art. By mechanically controlling start and stop of a piston through a mushroom valve assembly, low failure rates and high stability and reliability are achieved, and a mass of the mushroom valve assembly is small, which is beneficial to improving a response speed and increasing a control accuracy.

The technical solutions of the present application provide a piston liquid hydrogen pump, including: a pump body, wherein the pump body includes: a driving part, wherein the driving part includes a driving cavity, a first piston is arranged in the driving cavity, the first piston is slidably and hermetically arranged in the driving cavity to divide the driving cavity into a first driving cavity and a second driving cavity which are independent from each other, the first driving cavity is provided with a first driving liquid inlet/outlet, and the second driving cavity is provided with a second driving liquid inlet/outlet; a mushroom valve assembly, wherein the first piston is provided with a liquid through hole communicating the first driving cavity and the second driving cavity, the mushroom valve assembly is movably arranged in the liquid through hole and seals the liquid through hole when moving to an opening of the liquid through hole, and the mushroom valve assembly includes a first valve stem and a second valve stem which are arranged back to back and capable of oppositely extending out of the liquid through hole; a hydraulic part, wherein the hydraulic part includes a hydraulic cavity, a second piston is arranged in the hydraulic cavity, the second piston is slidably and hermetically arranged in the hydraulic cavity to divide the hydraulic cavity into a first hydraulic cavity and a second hydraulic cavity; and a piston rod, wherein the piston rod is hermetically connected between the first piston and the second piston, the second hydraulic cavity is located at one side of the second piston facing away from the first piston, and the second hydraulic cavity is provided with a liquid hydrogen one-way inlet and a liquid hydrogen one-way outlet.

Alternatively, inner walls of two openings of the liquid through hole are respectively provided with a first diameter-reducing step and a second diameter-reducing step, and the mushroom valve assembly includes a first sealing surface and a second sealing surface; and the first sealing surface seals one opening of the liquid through hole when contacting with the first diameter-reducing step, and the second sealing surface seals the other opening of the liquid through hole when contacting with the second diameter-reducing step.

Alternatively, the mushroom valve assembly further includes a connecting rod, the first mushroom valve includes a first valve head, and the second mushroom valve includes a second valve head; and the first valve head is provided with a first limiting counterbore, the second valve head is provided with a second limiting counterbore, and both ends of the connecting rod are slidably limited in the first limiting counterbore and the second limiting counterbore respectively.

Alternatively, the first valve head and the second valve head are polygons or circles, thicknesses of the first valve head and the second valve head gradually decrease along a direction from a center of the polygon or the circle to a periphery, the first limiting counterbore is located at a center of the first valve head and the second limiting counterbore is located at a center of the second valve head. Alternatively, one liquid through hole is provided, and the first diameter-reducing step and the second diameter-reducing step are respectively located at the two openings of the liquid passing holes; and the mushroom valve assembly includes a first mushroom valve and a second mushroom valve which are fixedly or movably connected, the first valve stem and the first sealing surface are located on the first mushroom valve, and the second valve stem and the second mushroom valve are located on the second mushroom valve.

Alternatively, two liquid through holes are provided, and the first diameter-reducing step and the second diameter-reducing step are respectively located in the two liquid through holes; and the mushroom valve assembly includes a first mushroom valve and a second mushroom valve which are independent from each other, the first mushroom valve and the second mushroom valve are respectively arranged in the two liquid through holes, the first valve stem is located on the first mushroom valve, the second valve stem is located on the second mushroom valve, and the first valve stem and the second valve stem respectively extend out from the two liquid through holes in opposite directions.

Alternatively, the driving part is provided with a first shaft seal, the hydraulic part is provided with a second shaft seal, the piston rod penetrates out of the driving part from the first shaft seal, and the piston rod penetrates out of the hydraulic part from the second shaft seal; and the first shaft seal and the second shaft seal keep a distance along an axial direction of the piston rod, and a part of the piston rod located between the first shaft seal and the second shaft seal is exposed to form an exposed section.

Alternatively, the piston liquid hydrogen pump further includes a driving assembly, and the driving assembly includes: a controller, a reversing valve, a hydraulic pump, a first hydraulic pipe, a second hydraulic pipe, a hydraulic tank and a pressure sensor; the first hydraulic pipe is communicated between the first driving liquid inlet/outlet and the hydraulic tank, and the second hydraulic pipe is communicated between the second driving liquid inlet/outlet and the hydraulic tank; the reversing valve is located on both of the first hydraulic pipe and the second hydraulic pipe, the hydraulic pump and the pressure sensor are located on the first hydraulic pipe, and the pressure sensor is located at an outlet side of the hydraulic pump for detecting a pressure of the first hydraulic pipe; an output end of the pressure sensor is in communication connection with an input end of the controller; and an input end of the hydraulic pump and an input end of the reversing valve are in communication connection with an output end of the controller.

The present application further provides a hydrogen fueling system, including: a liquid hydrogen storage tank, a vaporizer, a buffer tank, a liquid hydrogen pipeline, a gaseous hydrogen pipeline, a gaseous hydrogen fueling machine, and a piston liquid hydrogen pump of any of the above embodiments; the piston liquid hydrogen pump is arranged in the liquid hydrogen storage tank; and the liquid hydrogen pipeline is connected between the liquid hydrogen storage tank and the vaporizer, the gaseous hydrogen pipeline is connected between the vaporizer and the gaseous hydrogen fueling machine, and the buffer tank is located on the gaseous hydrogen pipeline.

Alternatively, the hydrogen fueling system further includes a liquid hydrogen fueling machine and an insulation liquid hydrogen pipeline; and the insulation liquid hydrogen pipeline is connected between the liquid hydrogen storage tank and the liquid hydrogen fueling machine.

Alternatively, the hydrogen fueling system further includes a precooling part, and the precooling part includes a precooling pipe and/or a heat interchanger; a hot end of the precooling pipe is connected to the gaseous hydrogen fueling machine, the hot end of the precooling pipe is communicated with the liquid hydrogen storage tank, or communicated to a cold end of the vaporizer, or communicated to a pipeline located between the liquid hydrogen storage tank and the vaporizer; and the heat exchanger includes a hot flow pipeline and a cold flow pipeline which exchange heat, the hot flow pipeline is communicated with the gaseous hydrogen fueling machine, the cold flow pipeline is communicated with the liquid hydrogen storage tank, or communicated with the cold end of the vaporizer, or communicated with the pipeline located between the liquid hydrogen storage tank and the vaporizer. Alternatively, a vent pipe is installed on the liquid hydrogen storage tank, and a safety valve is arranged on the vent pipe; and the hydrogen fueling system further includes a pressurization pipeline which is connected between the vaporizer and the liquid hydrogen storage tank through a control valve.

Alternatively, at least two piston liquid hydrogen pumps are provided, and the at least two piston liquid hydrogen pumps are arranged in the liquid hydrogen storage tank.

By adopting the above technical solutions, the present application has the following beneficial effects:
According to the piston liquid hydrogen pump and the hydrogen fueling system provided in the present application, both of the first valve stem and the second valve stem in the mushroom valve assembly can protrude from the first piston at respective end positions thereof to mechanically control the movement of the first piston, so that the first piston can be mechanically controlled to stop in both a compression stroke and a suction stroke, without generating a large mechanical impact, and without relying on other components (such as a position sensor) with high failure rates. Moreover, the mushroom valve assembly is very light, and produces very little vibration to a cavity wall when contacting the cylinder wall, and has the effects of high reliability, low vibration, and fast response speed.

### DESCRIPTION OF THE DRAWINGS

FIG. 1 is a schematic structural diagram of a piston liquid hydrogen pump according to an embodiment of the present application;
FIG. 2 is a schematic structural diagram of a piston liquid hydrogen pump with an exposed section according to an embodiment of the present application;
FIG. 3 is a schematic structural diagram of a first mushroom valve and a second mushroom valve fixedly connected and arranged in one liquid through hole according to an embodiment of the present application;
FIG. 4 is a schematic structural diagram of a first mushroom valve and a second mushroom valve movably connected and arranged in one liquid through hole according to an embodiment of the present application;
FIG. 5 is a schematic structural diagram of a first mushroom valve and a second mushroom respectively arranged in two liquid through holes according to an embodiment of the present application;
FIG. 6a is a schematic structural diagram of a first sealing surface abutting against a first diameter-reducing step according to an embodiment of the present application;
FIG. 6b is a schematic structural diagram of a second sealing surface abutting against a second diameter-reducing step according to an embodiment of the present application;
FIG. 7a is a schematic structural diagram of a first mushroom valve and a second mushroom valve which are connected via a connecting rod but are not contacted according to an embodiment of the present application;
FIG. 7b is a schematic structural diagram of a first mushroom valve and a second mushroom valve which are connected via a connecting rod but are not contacted according to an embodiment of the present application;
FIG. 7c is a schematic structural diagram of a first mushroom valve and a second mushroom valve which are connected via a connecting rod but are not contacted, and respectively abutting against a first sealing surface and a second sealing surface according to an embodiment of the present application;
FIG. 7d is a schematic structural diagram of a first mushroom valve and a second mushroom valve which are connected via a connecting rod but are not contacted, and respectively abutting against a first sealing surface and a second sealing surface according to an embodiment of the present application;
FIG. 7e is a schematic structural diagram of a first mushroom valve and a second mushroom which are contacted according to an embodiment of the present application;
FIG. 7f is a schematic structural diagram of a first mushroom valve and a second mushroom which are contacted according to an embodiment of the present application;
FIG. 8a is a schematic structural diagram of a first valve head which is a hexagon with arc transitions according to an embodiment of the present application;
FIG. 8b is a schematic structural diagram of a first valve head which is a pentagon with arc transitions according to an embodiment of the present application;
FIG. 8c is a schematic structural diagram of a first valve head which is a quadrangle with arc transitions according to an embodiment of the present application;
FIG. 8d is a schematic structural diagram of a first valve head which is a hexagon according to an embodiment of the present application;
FIG. 8e is a schematic structural diagram of a first valve head which is a pentagon according to an embodiment of the present application;
FIG. 8f is a schematic structural diagram of a first valve head which is a quadrangle according to an embodiment of the present application;
FIG. 9 is a flow chart of a driving connection between a driving assembly and a piston liquid hydrogen pump provided with one liquid through hole according to an embodiment of the present application;
FIG. 10 is a flow chart of a driving connection between a driving assembly and a piston liquid hydrogen pump provided with two liquid through holes according to an embodiment of the present application;
FIG. 11 is a flow chart of a hydrogen fueling system according to an embodiment of the present application;
FIG. 12 is a flow chart of a hydrogen fueling system provided with a liquid hydrogen fueling machine and an insulation liquid hydrogen pipeline according to an embodiment of the present application;
FIG. 13 is a flow chart of a hydrogen fueling system provided with a safety valve and a pressurizing pipeline according to an embodiment of the present application; and
FIG. 14 is a schematic structural diagram of a liquid hydrogen storage tank provided with two piston liquid hydrogen pumps according to an embodiment of the present application.

### Reference Numerals

100 - pump body;
1 - driving part, 10 - driving cavity, 11 - first piston, 12 - first driving cavity, 13 - second driving cavity, 14 - first driving liquid inlet/outlet, 15 - second driving liquid inlet/outlet, 16 - liquid through hole, 17 - first diameter-reducing step, 18 - second diameter-reducing step, 19 - first shaft seal;
2 - mushroom valve assembly, 20 - first sealing surface, 21 - second sealing surface, 22 - first mushroom valve, 23 - second mushroom valve, 24 - first valve stem, 25 - second valve stem, 26 - connecting rod, 27 - first valve head, 28 - second valve head, 29 - flowing channel;
3 - hydraulic part, 30 - hydraulic cavity, 31 - second piston, 32 - first hydraulic cavity, 33 - second hydraulic cavity, 34 - liquid hydrogen one-way inlet, 35 - liquid hydrogen one-way outlet, 36 - second shaft seal, 37 - mounting flange;
4 - piston rod, and 40 - exposed section;
5 - controller, 50 - reversing valve, 51 - hydraulic pump, 52 - first hydraulic pipe, 53 - second hydraulic pipe, 54 - hydraulic tank, 55 - pressure sensor;
6 - hydrogen fueling system, 60 - liquid hydrogen storage tank, 61 - vaporizer, 62 - buffer tank, 63 - liquid hydrogen pipeline, 630 - gaseous hydrogen pipeline, 64 - gaseous hydrogen fueling machine, 65 - liquid hydrogen fueling machine, 66 - insulation liquid hydrogen pipeline, 67 - first temperature sensor, 68 - first pressure sensor, 69 - second pressure sensor;
7 - pressurization pipeline, 70 - vent pipe, 71- safety valve, 72 - control valve, 73 - check valve, 74 - restriction orifice; and
8 - precooling pipe.

### DESCRIPTION OF EXEMPLARY EMBODIMENTS

The specific embodiments of the present disclosure will be further described with reference to the drawings hereinafter.

It is easy to be understood that, in accordance with the technical solutions of the present invention, those of ordinary skills in the art can propose various structural forms and implementations that are interchangeable without departing from the spirit of the present invention. Therefore, the following detailed description and the drawings are merely illustrative of the technical solutions of the present invention, and should not be regarded as the whole of the present invention or as a limitation or restriction on the technical solutions of the present invention.

The orientation terms like upper, lower, left, right, front, back, front side, back side, top, bottom, or the like, mentioned or possibly mentioned in the specification are defined with respect to the structures shown in the drawings, which are relative concepts, and therefore, may be changed correspondingly according to different positions and different use states thereof. Therefore, these or other orientation terms should not be interpreted as restrictive terms.

The present application provides a piston liquid hydrogen pump, including: a pump body 100. The pump body 100 includes: a driving part 1, a mushroom valve assembly 2, a hydraulic part 3 and a piston rod 4.

The driving part 1 includes a driving cavity 10, a first piston 11 is arranged in the driving cavity 10, the first piston 11 is slidably and hermetically arranged in the driving cavity 10 to divide the driving cavity 10 into a first driving cavity 12 and a second driving cavity 13 which are independent from each other. The first driving cavity 12 is provided with a first driving liquid inlet/outlet 14, and the second driving cavity 13 is provided with a second driving liquid inlet/outlet 15.

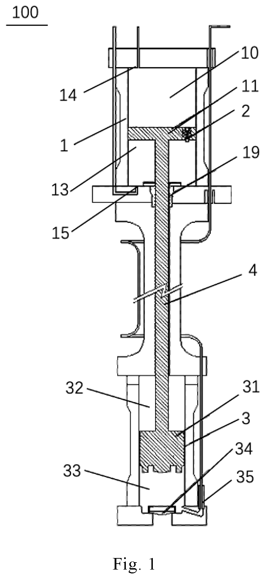

As shown in FIG. 1 to FIG. 5, the first piston 11 is provided with a liquid through hole communicating the first driving cavity 12 and the second driving cavity 13. The mushroom valve assembly 2 is movably arranged in the liquid through hole 16, and seals the liquid through hole 16 when moving to an opening of the liquid through hole 16. The mushroom valve assembly 2 includes a first valve stem 24 and a second valve stem 25 which are arranged back to back and capable of oppositely extending out of the liquid through hole 16.

The hydraulic part 3 includes a hydraulic cavity 30. A second piston 31 is arranged in the hydraulic cavity 30. The second piston 31 is slidably and hermetically arranged in the hydraulic cavity 30 to divide the hydraulic cavity 30 into a first hydraulic cavity 32 and a second hydraulic cavity 33.

As shown in FIG. 1 to FIG. 2, the piston rod 4 is hermetically connected between the first piston 11 and the second piston 31. The second hydraulic cavity 33 is located at one side of the second piston 31 facing away from the first piston 11, and the second hydraulic cavity 33 is provided with a liquid hydrogen one-way inlet 34 and a liquid hydrogen one-way outlet 35. The piston rod 4 is connected with the first piston 11 and the second piston 31, forming an integrated linkage mechanism with the first piston 11 and the second piston 31, which can move under an action of a hydraulic pressure (hydraulic oil) to compress and suck liquid hydrogen, thus realizing a fundamental function of the piston liquid hydrogen pump. The liquid hydrogen one-way inlet 34 and the liquid hydrogen one-way outlet 35 are both provided with a check valve 73.

According to the piston liquid hydrogen pump provided by the embodiments of the present application, during a compression stroke, the hydraulic oil is input into the first driving cavity 12 of the driving part 1 through the first driving liquid inlet/outlet 14, and the hydraulic oil in the first driving cavity 12 pushes the first piston 11 downward. The first piston 11 is connected with the second piston 31 through the piston rod 4, and drives the second piston 31 to move downward at the same time, squeezing the liquid hydrogen in the second hydraulic cavity 33. The pressurized liquid hydrogen is output through the liquid hydrogen one-way outlet 35 and a discharge pipeline.

During a suction stroke, the hydraulic oil is connected to the second driving cavity 13 of the driving part 1 through the second driving liquid inlet/outlet 15. The hydraulic oil in the second driving cavity 13 pushes the second piston 31 to move upward, and the second piston 31 is also driven to move upward through the piston rod 4. The liquid hydrogen is sucked into the second hydraulic cavity 33 through the liquid hydrogen one-way inlet 34, so as to compress the liquid hydrogen in a next compression stroke.

At the end points of the compression stroke and the suction stroke, the movement of the first piston 11 is stopped by the mushroom valve assembly 2. The first valve stem 24 and the second valve stem 25 protrude a certain distance from the first piston 11 in a closed position. When the piston moves to the end point, the protruding first valve stem 24 or second valve stem 25 first contacts a cavity wall of the driving cavity 10, and the mushroom valve assembly 2 is stopped by the cavity wall. At this moment, the first piston 11 is pushed by the hydraulic oil to continue to move, so that a relative position of the mushroom valve assembly 2 and the first piston 11 changes, the mushroom valve assembly 2 is separated from the opening of the liquid through hole 16, and a liquid through channel of the liquid through hole 16 is opened. The hydraulic oil flows to the other side of the first piston 11 through the open channel, resulting in a rapid increase in a pressure of the hydraulic oil on the other side, a rapid decrease in a pressure difference between the two sides of the first piston 11, and the first piston 11 loses a thrust to continue moving and stops.

Both the first valve stem 24 and the second valve stem 25 can stop the movement of the first piston 11 by mechanical control at the end positions of their respective strokes, so that the first piston 11 can be stopped reliably in both of the compression stroke and the suction stroke. This stop control depends on pressure balance of the hydraulic oil on both sides of the first piston 11, without causing large mechanical impact, and without relying on other components (such as a position sensor) with high failure rate.

In the embodiments of the present application, the first valve stem 24 and the second valve stem 25 in the mushroom valve assembly 2 can both protrude from the first piston at respective end positions thereof to mechanically control the movement of the first piston 11, so that the first piston 11 can be mechanically controlled to stop in both of the compression stroke and the suction stroke, without generating a large mechanical impact, and without relying on other components (such as a position sensor) with high failure rates. Moreover, the mushroom valve assembly 2 is very light, and produces very little vibration to the cavity wall when contacting the cavity wall, and has the effects of high reliability, low vibration, and fast response speed.

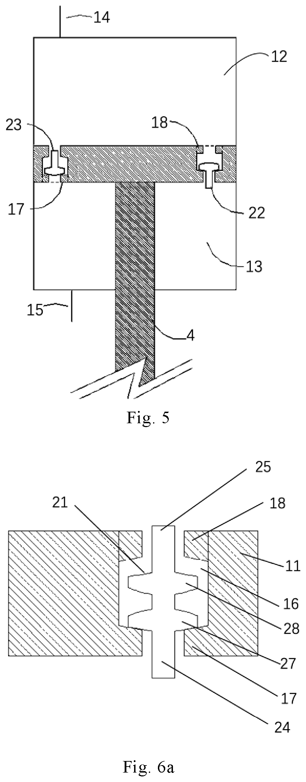

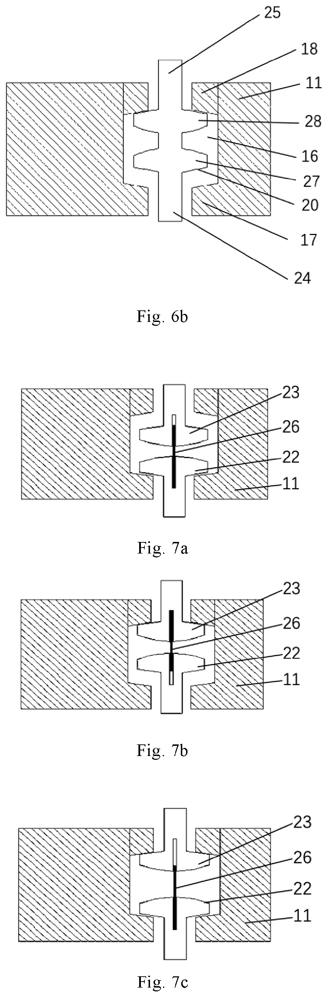

As an alternative embodiment, inner walls of two openings of the liquid through hole 16 are respectively provided with a first diameter-reducing step 17 and a second diameter-reducing step 18, and the mushroom valve assembly 2 includes a first sealing surface 20 and a second sealing surface 21. The first sealing surface 20 can seal one opening of the liquid through hole 16 when contacting with the first diameter-reducing step 17 under the pressure of the hydraulic oil, and the second sealing surface 21 can seal the other opening of the liquid through hole 16 when contacting with the second diameter-reducing step 18 under the pressure of the hydraulic oil. As shown in FIG. 6a to FIG. 6b, both the first diameter-reducing step 17 and the second diameter-reducing step 18 in the embodiments of the present application can be defined by a cylindrical structure arranged on an inner wall of the opening of the liquid through hole 16, and the cylindrical structure is fixed on the inner wall of the liquid through hole 16 by means of screw connection, welding, interference fit and the like, so that the opening of the liquid through hole 16 is in a diameter-reduced state, defing the first diameter-reducing step 17 and the second diameter-reducing step 18. The cylindrical structure may be a nut.

As an alternative embodiment, the mushroom valve assembly 2 further includes a connecting rod 26. The first mushroom valve 22 includes a first valve head 27, and the second mushroom valve 23 includes a second valve head 28. The first valve head 27 is provided with a first limiting counterbore, and the second valve head 28 is provided with a second limiting counterbore. Both ends of the connecting rod 26 are slidably limited in the first limiting counterbore and the second limiting counterbore respectively. The first sealing surface 20 is located on the first valve head 27, and one side of the first valve head 27 facing away from the first sealing surface 20 is provided with the first limiting counterbore. The second sealing surface 21 is located on the second valve head 28, and one side of the second valve head 28 facing away from the second sealing surface 21 is provided with the second limiting counterbore.

The connecting rod 26 is a pin-shaped straight rod. Both ends of the connecting rod 26 may be provided with a limiting protrusion, and are respectively limited, through the limiting protrusions, in the first limiting counterbore and the second limiting counterbore arranged in a necking way, so that the connecting rod 26 can freely slide but not slip out. The connecting rod 26 plays a role of guiding and positioning the first mushroom valve 22 and the second mushroom valve 23, and maintains a relative position of the first mushroom valve 22 and the second mushroom valve 23. The first mushroom valve 22 and the second mushroom valve 23 can only move in a direction of the movement of the first piston 11 to prevent the first mushroom valve 22 and the second mushroom valve 23 from being deflected.

A stress on the connecting rod 26 is very small, which is mainly caused by gravity of the mushroom valve assembly 2, a small impact force when starting and stopping, and an unbalanced force of fluid scouring. The strength of the connecting rod 26 is designed according to the stress on the connecting rod. In order to reduce a size of the connecting rod 26 and decrease the stress on the connecting rod 26, a sum of depths of the first limiting counterbore and the second limiting counterbore can be designed to be greater than a length of the connecting rod 26, so that the first valve head 27 and the second valve head 28 can contact each other without contacting through the connecting rod 26. An impact force on the mushroom valve assembly 2 only affects the mushroom valve assembly 2 itself. The connecting rod 26 is not affected by the impact force, but is only subjected to the unbalanced force. The connecting rod 26 can be made small, and reducing the size of the connecting rod 26 is beneficial to reducing a size of the first limiting counterbore and a size of the second limiting counterbore. Reducing the first limiting counterbore and the second limiting counterbore can ensure the strength of the first valve head 27 and the second valve head 28 without increasing an extra thickness. The umbrella-shaped first valve head 27 and the umbrella-shaped second valve head 28 can be made as thin as possible to realize high-pressure sealing and quick response with a light weight.

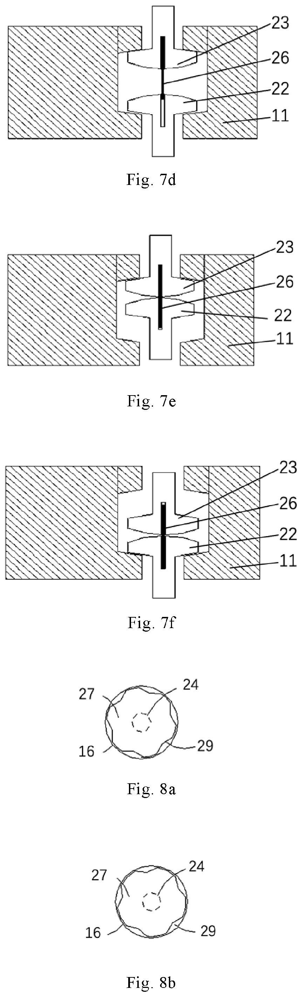

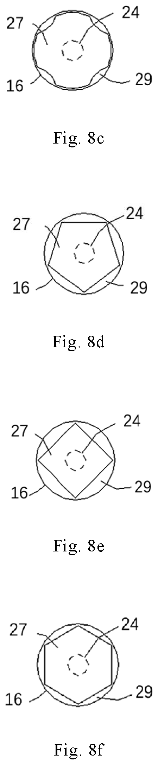

As an alternative embodiment, the first valve head 27 and the second valve head 28 are polygons or circles. Thicknesses of the first valve head 27 and the second valve head 28 gradually decrease along a direction from a center of the polygon or the circle to a periphery. The first limiting counterbore is located at a center of the first valve head 27 and the second limiting counterbore is located at a center of the second valve head 28. As shown in FIG. 8a to FIG. 8e, when the first valve head 27 and the second valve stem 25 are polygons such as squares, pentagons, hexagons, or the like, a gap between the polygon and the circular liquid through hole 16 in the first piston 11 naturally forms a flowing channel 29 for the hydraulic oil. When the first valve head 27 and the second valve head 28 are circles, it is necessary to open a plurality of diversion trenches on the circumference of the first valve head 27 and the second valve head 28, to form gaps between the circumference and the liquid through hole 16 as the flowing channel 29 for the hydraulic fluid.

As shown in FIG. 7a to FIG. 7e, the first valve head 27 and the second valve head 28 are designed to be thick in center and thin in edge. The central parts of the first valve head 27 and the second valve head 28 play a role of bearing pressure, and are areas with greatest stress. The edge cooperates with the first sealing surface 20 and the second sealing surface 21 to play a sealing role, and a weight-area ratio of the edge is smaller than that of the central part. Such a structure can reduce the weight as much as possible on the premise of keeping a stress area and a compressive strength unchanged. Therefore, the mushroom valve assembly 2 has a faster response time when switching between an open position and a closed position thereof.

At the moment of start, the hydraulic oil is reversed, and the pressure of the hydraulic oil keeps rising, which pushes the mushroom valve assembly 2 to move in the first piston 11 and be closed when moving to the end. Only after the mushroom valve assembly 2 is quickly moved to the end and closed, the pressure of the hydraulic oil on both sides of the first piston 11 can establish a pressure difference, and the first piston 11 may generate a thrust and move. Under the same cross-sectional area, the smaller the mass, the sooner a valve core moves and closes; the larger the mass, the later the valve core moves and closes. Therefore, the valve core with small mass has fast response speed and good response effect. In the present application, the mushroom-shaped first valve head 27 and the mushroom-shaped second valve head 28 are preferred shapes to realize the response.

As an alternative embodiment, one liquid through hole 16 is provided, and the first diameter-reducing step 17 and the second diameter-reducing step 18 are respectively located in two openings of the liquid through holes 16. The mushroom valve assembly 2 includes a first mushroom valve 22 and a second mushroom valve 23 which are fixedly or movably connected, the first valve stem 24 and the first sealing surface 20 are located on the first mushroom valve 22, and the second valve stem 25 and the second mushroom valve 23 are both ocated on the second mushroom valve 23. The first valve stem 24 is installed on one side of the first mushroom valve 22 provided with the first sealing surface 20, and the second valve stem 25 is installed on one side of the second mushroom valve 23 provided with the second sealing surface 21.

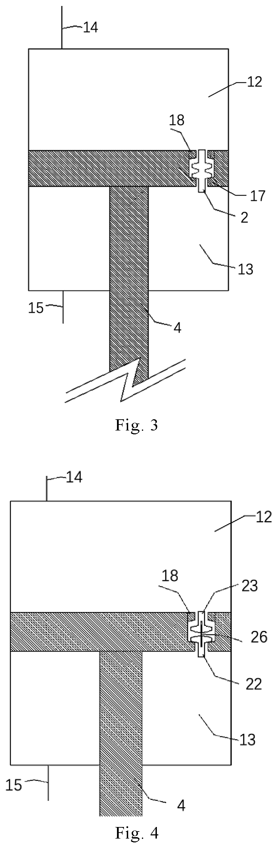

As shown in FIG. 3, when the first mushroom valve 22 and the second mushroom valve 23 are fixedly connected, the first mushroom valve 22 and the second mushroom valve 23 are fixedly connected together to form a mushroom string valve. The mushroom string valve with fixed connection is processed by one piece, and the mushroom string valve is formed by mechanical processing, which simplifies design and improves reliability.

As an alternative embodiment, two liquid through holes 16 are provided, and the first diameter-reducing step 17 and the second diameter-reducing step 18 are respectively located in the two liquid through holes 16. The mushroom valve assembly 2 includes a first mushroom valve 22 and a second mushroom valve 23 which are independent from each other. The first mushroom valve 22 and the second mushroom valve 23 are respectively arranged in the two liquid through holes 16. The first valve stem 24 is located on the first mushroom valve 22, the second valve stem 25 is located on the second mushroom valve 23. The first valve stem 24 and the second valve stem 25 respectively extend out from the two liquid through holes 16 in opposite directions. As shown in FIG. 5, the embodiment of the present application is another alternative embodiment of the mushroom valve assembly 2 and the liquid through hole 16. The first mushroom valve 22 and the second mushroom valve 23 are respectively arranged in the two liquid through holes 16 in opposite directions. Compared with the way of arranging the first mushroom valve 22 and the second mushroom valve 23 in one liquid through hole 16, this embodiment is beneficial to reducing a weight of the mushroom valve in the liquid through hole 16, so that a driving force required for the mushroom valve to move is smaller, and a closing time driven by a fluid force is shorter, which improves a response closing speed of the mushroom valve assembly 2.

As an alternative embodiment, the driving part 1 is provided with a first shaft seal 19, and the hydraulic part 3 is provided with a second shaft seal 36. The piston rod 4 penetrates out of the driving part 1 from the first shaft seal 19, and the piston rod 4 penetrates out of the hydraulic part 3 from the second shaft seal 36. The first shaft seal 19 and the second shaft seal 36 keep a distance along an axial direction of the piston rod 4, and a part of the piston rod 4 located between the first shaft seal 19 and the second shaft seal 36 is exposed to form an exposed section 40. The exposed section 40 of the piston rod 4 is completely exposed to ambient air. The design of the exposed section 40 completely isolates the driving part 1 from the hydraulic part 3. When the first shaft seal 19 fails, the hydraulic oil only leaks into the ambient air. When the hydrogen leaks, the hydrogen may fully flow and diffuse in the exposed section 40 to avoid pressure accumulation. When the second shaft seal 36 fails, the hydrogen in the storage tank only leaks to the ambient air. When the first shaft seal 19 or the second shaft seal 36 fails, the hydraulic oil is prevented from entering the liquid hydrogen storage tank 60 from a gap between a shaft and a shaft sleeve to pollute the liquid hydrogen, and the hydrogen in the liquid hydrogen storage tank 60 is also prevented from entering a hydraulic oil system to form an explosion hazard, which is an intrinsically safer design. That is, when the shaft seal fails, the hydraulic oil and the hydrogen will not mix with each other. In addition, both the first shaft seal 19 and the second shaft seal 36 are provided with an O-shaped sealing ring adapted to the piston rod 4, so as to realize waterproof, dustproof and weatherproof functions.

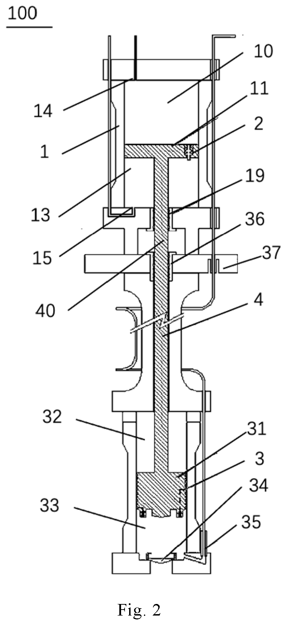

Specifically, a mounting flange 37 is provided above the hydraulic part 3, and the second shaft seal 36 is located on the mounting flange 37. The exposed section 40 is located at an upper part of the mounting flange 37. As shown in FIG. 2, after the piston liquid hydrogen pump is vertically installed at a top part of the liquid hydrogen storage tank 60, the exposed section 40 is exposed to the ambient air. A low part of the mounting flange 37 is connected with a liquid hydrogen storage tank 60. During an operation status inspection, it is checked whether the first shaft seal 19 on the piston rod 4 leaks oil (hydraulic oil) at the exposed section 40, and it is checked whether the second shaft seal 36 leaks air (hydrogen), so that sealing performances of the first shaft seal 19 and the second shaft seal 36 may be checked at any time. Any abnormality can be found and repaired in time if any. Since exposed section 40 of the piston rod 4 is completely exposed, equipment operation status diagnosis and integrity check can be performed. For example, vibration monitoring, stroke length monitoring, operation stability detection, displacement accuracy detection of the piston rod 4 can be detected. An online monitoring sensor can be installed at the exposed section 40 for online monitoring, and an intelligent liquid hydrogen pump with fault detection function may be formed.

As an alternative embodiment, the piston liquid hydrogen pump further includes a driving assembly, and the driving assembly includes: a controller 5, a reversing valve 50, a hydraulic pump 51, a first hydraulic pipe 52, a second hydraulic pipe 53, a hydraulic tank 54 and a pressure sensor 55. The first hydraulic pipe 52 is communicated between the first driving liquid inlet/outlet 14 and the hydraulic tank 54, and the second hydraulic pipe 53 is communicated between the second driving liquid inlet/outlet 15 and the hydraulic tank 54. The reversing valve 50 is located on both of the first hydraulic pipe 52 and the second hydraulic pipe 53, the hydraulic pump 51 and the pressure sensor 55 are located on the first hydraulic pipe 52, and the pressure sensor 55 is located at an outlet side of the hydraulic pump 51 for detecting a pressure of the first hydraulic pipe 52. An output end of the pressure sensor 55 is in communication connection with an input end of the controller 5. An input end of the hydraulic pump 51 and an input end of the reversing valve 50 are in communication connection with an output end of the controller 5. The hydraulic tank 54 in the embodiment of the present application stores hydraulic oil.

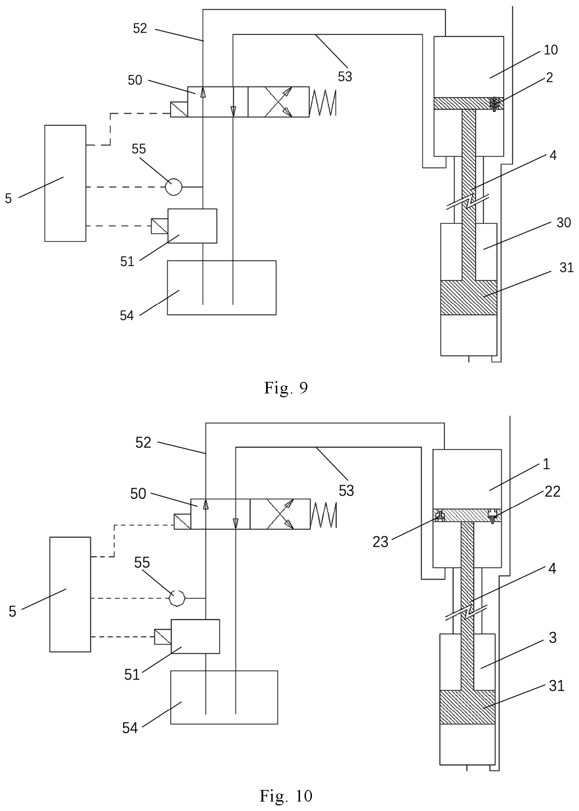

As shown in FIG. 9 and FIG. 10, the mushroom valve assembly 2 mechanically controls the stroke to stop at the end point. During the compression stroke, the controller 5 controls a valve position of the reversing valve 50 to communicate the hydraulic oil to the first driving cavity 12 of the driving part 1, and the hydraulic oil pushes the first piston 11 to move downward in the first driving cavity 12. The controller 5 determines whether the first piston 11 reaches the end point of the compression stroke according to a pressure change monitored by the pressure sensor 55, and after the first piston 11 stops at the end point, controls the reversing valve 50 to reverse and perform the suction stroke. The hydraulic oil is connected to the second driving cavity 13 of the driving part 1, and the hydraulic oil pushes the second piston 31 to move upward in the second driving cavity 13; then the hydraulic oil is stopped by the mechanical control of the mushroom valve assembly 2 at the end point of the suction stroke, and reversed again after being detected by the controller 5 to start next stroke. The control is repeated in this way until the controller 5 gives an instruction to stop the operation.

The present application further provides a hydrogen fueling system 6, including: a liquid hydrogen storage tank 60, a vaporizer 61, a buffer tank 62, a liquid hydrogen pipeline 63, a gaseous hydrogen pipeline 630, a gaseous hydrogen fueling machine 64, and an piston liquid hydrogen pump of any of the above embodiments. The piston liquid hydrogen pump is arranged in the liquid hydrogen storage tank 60. The liquid hydrogen pipeline 63 is connected between the liquid hydrogen storage tank 60 and the vaporizer 61. The gaseous hydrogen pipeline 630 is connected between the vaporizer 61 and the gaseous hydrogen fueling machine 64. The buffer tank 62 is located on the gaseous hydrogen pipeline 630.

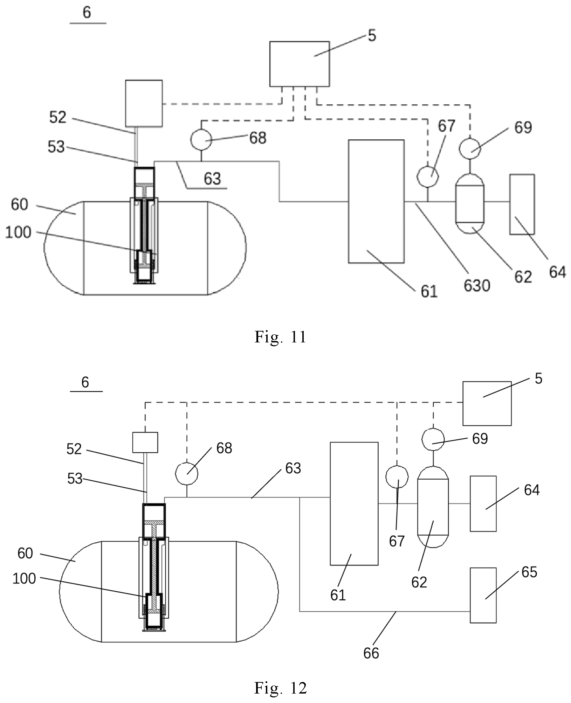

As shown in FIG. 11, in the present application, the liquid hydrogen is transported downstream by controlling the operation of the liquid hydrogen pump. The vaporizer 61 vaporizes the high-pressure liquid hydrogen and raises the temperature to normal-temperature high-pressure gaseous hydrogen, and the normal-temperature high-pressure gaseous hydrogen is stored in the buffer tank 62 and supplied to the hydrogen fueling machine. Hydrogen fueling precooling can be carried out by using a cooling capacity of the liquid hydrogen, which meets T40-level fast hydrogen fueling requirements of J2601 protocol.

When the piston liquid hydrogen pump includes a driving assembly, the controller 5 in the driving assembly may also be applied to the hydrogen fueling system 6. The liquid hydrogen pipeline 63 is provided with a first pressure sensor 68, the gas hydrogen pipeline 630 is provided with a first temperature sensor 67, and the buffer tank 62 is provided with a second pressure sensor 69, which are used to measure temperatures and pressures at various places. The detection signals are transmitted to the controller 5, and the controller 5 controls the hydrogen fueling system as a whole according to the temperature and pressure signals.

As an alternative embodiment, the hydrogen fueling system 6 further includes a liquid hydrogen fueling machine 65 and an insulation liquid hydrogen pipeline 66. The insulation liquid hydrogen pipeline 66 is connected between the liquid hydrogen storage tank 60 and the liquid hydrogen fueling machine 65. As shown in FIG. 12, in the embodiments of the present application, both of an output pressure and an output flow of the piston liquid hydrogen pump are adjustable, and can be controlled by the controller 5 at any time as required, which is very convenient to meet various technological needs. By adjusting the output pressure of the pump and switching the valves, the system can not only fuel gas-hydrogen vehicles, but also fuel liquid-hydrogen vehicles. Low-temperature liquid hydrogen and low-temperature gaseous hydrogen are transported by double-layer insulation pipelines. The controller 5 collects the pressure and temperature signals at each detection point, and intelligently controls each device and the transportation of process medium (control valves are not fully shown).

As an alternative embodiment, the hydrogen fueling system 6 further includes a precooling part, and the precooling part includes a precooling pipe 8 and/or a heat interchanger. A hot end of the precooling pipe 8 is connected to the gaseous hydrogen fueling machine 65, the hot end of the precooling pipe 8 is communicated with the liquid hydrogen storage tank 60, or communicated to a cold end of the vaporizer 61, or communicated to a pipeline located between the liquid hydrogen storage tank 60 and the vaporizer 61. The heat exchanger includes a hot flow pipeline and a cold flow pipeline which exchange heat. The hot flow pipeline is communicated with the gaseous hydrogen fueling machine 65, the cold flow pipeline is communicated with the liquid hydrogen storage tank 60, or communicated with the cold end of the vaporizer 61, or communicated with the pipeline located between the liquid hydrogen storage tank 60 and the vaporizer 61. The embodiments of the present application include at least one of the precooling pipe 8 and the heat exchanger. The gaseous hydrogen fueling machine 65 is controllably communicated with the liquid hydrogen storage tank 60, or the cold end of the vaporizer 61, or the pipeline between the liquid hydrogen storage tank 60 and the vaporizer 61 through the precooling pipe 8 for exchanging heat. And/or, the heat exchanger is adopted to realize heat exchange between the gaseous hydrogen fueling machine 65 and the liquid hydrogen storage tank 60, or the cold end of the vaporizer 61, or the pipeline between the liquid hydrogen storage tank 60 and the vaporizer 61, so that the gaseous hydrogen fueling process can be precooled by using the self-contained cooling capacity of the liquid hydrogen, and a rapid hydrogen fueling capability is realized. The liquid hydrogen storage tank 60 in the embodiments of the present application may be a storage tank with zero evaporation (ZBO) capability.

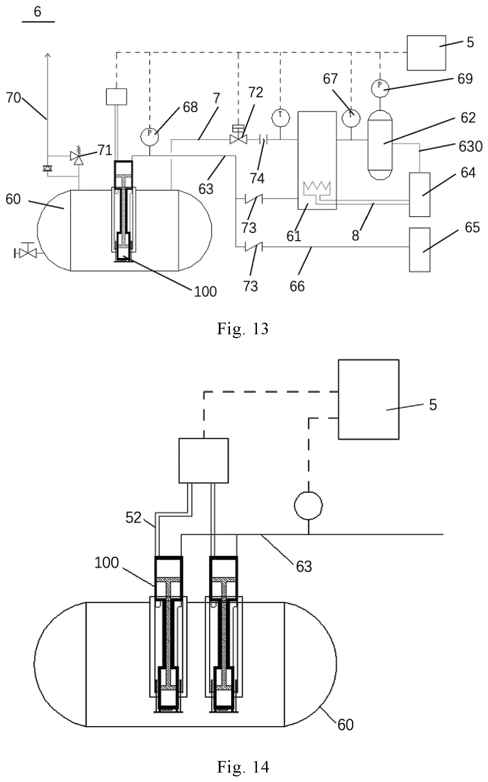

As an alternative embodiment, a vent pipe 70 is installed on the liquid hydrogen storage tank 60, and a safety valve 71 is arranged on the vent pipe 70. The hydrogen fueling system 6 further includes a pressurization pipeline 7, and the pressurization pipeline 7 is connected between the vaporizer 61 and the liquid hydrogen storage tank 60 through a control valve 72. As shown in FIG. 13, in the embodiments of the present application, the self-contained cooling capacity of the liquid hydrogen is used for precooling in the process of gaseous hydrogen fueling, which realizes a rapid hydrogen fueling capability. The low-temperature hydrogen at a saturation temperature of a vaporizing section of the vaporizer 61 is used to control pressurization of the liquid hydrogen storage tank 60. The system also has various accessories and technical measures required by engineering specifications, such as the control valve 72, the restriction orifice 74, the check valve 73, the vent pipe 70 and the safety valve 71 located on the vent pipe 70.

As an alternative embodiment, at least two piston liquid hydrogen pumps are provided, and the at least two piston liquid hydrogen pumps are arranged in the liquid hydrogen storage tank 60. As shown in FIG. 14, installing at least two piston liquid hydrogen pumps on one liquid hydrogen storage tank 60 is beneficial to realizing mutual standby of multiple pumps, or multiple pumps work in parallel to increase a total delivery capacity for selection in various processes with different requirements.

As needed, the above technical solutions may be combined to achieve the best technical effect.

The above only describes the principles and the preferable embodiments of the present invention. It should be noted that for those of ordinary skills in the art, a number of other variations can be made on the basis of the principles of the present invention, which should also be regarded as the scope of protection of the present invention.

## Claims

1. A piston liquid hydrogen pump, comprising: a pump body, wherein the pump body comprises:
a driving part, wherein the driving part comprises a driving cavity, a first piston is arranged in the driving cavity, the first piston is slidably and hermetically arranged in the driving cavity to divide the driving cavity into a first driving cavity and a second driving cavity which are independent from each other, the first driving cavity is provided with a first driving liquid inlet/outlet, and the second driving cavity is provided with a second driving liquid inlet/outlet;
a mushroom valve assembly, wherein the first piston is provided with a liquid through hole communicating the first driving cavity and the second driving cavity, the mushroom valve assembly is movably arranged in the liquid through hole and seals the liquid through hole when moving to an opening of the liquid through hole, and the mushroom valve assembly comprises a first valve stem and a second valve stem which are arranged back to back and capable of oppositely extending out of the liquid through hole;
a hydraulic part, wherein the hydraulic part comprises a hydraulic cavity, a second piston is arranged in the hydraulic cavity, the second piston is slidably and hermetically arranged in the hydraulic cavity to divide the hydraulic cavity into a first hydraulic cavity and a second hydraulic cavity; and
a piston rod, wherein the piston rod is hermetically connected between the first piston and the second piston, the second hydraulic cavity is located at one side of the second piston facing away from the first piston, and the second hydraulic cavity is provided with a liquid hydrogen one-way inlet and a liquid hydrogen one-way outlet.

2. The piston liquid hydrogen pump according to claim 1, wherein inner walls of two openings of the liquid through hole are respectively provided with a first diameter-reducing step and a second diameter-reducing step, and the mushroom valve assembly comprises a first sealing surface and a second sealing surface; wherein
the first sealing surface seals one opening of the liquid through hole when contacting with the first diameter-reducing step, and the second sealing surface seals the other opening of the liquid through hole when contacting with the second diameter-reducing step.

3. The piston liquid hydrogen pump according to any one of claims 1 to 2, wherein the mushroom valve assembly further comprises a connecting rod, wherein the first mushroom valve comprises a first valve head, and the second mushroom valve comprises a second valve head; and
the first valve head is provided with a first limiting counterbore, the second valve head is provided with a second limiting counterbore, and both ends of the connecting rod are slidably limited in the first limiting counterbore and the second limiting counterbore respectively.

4. The piston liquid hydrogen pump according to claim 3, wherein the first valve head and the second valve head are polygons or circles, wherein thicknesses of the first valve head and the second valve head gradually decrease along a direction from a center of the polygon or the circle to a periphery, wherein the first limiting counterbore is located at a center of the first valve head and the second limiting counterbore is located at a center of the second valve head.

5. The piston liquid hydrogen pump according to claim 2, wherein one liquid through hole is provided, and the first diameter-reducing step and the second diameter-reducing step are respectively located at the two openings of the liquid passing holes; wherein
the mushroom valve assembly comprises a first mushroom valve and a second mushroom valve which are fixedly or movably connected, the first valve stem and the first sealing surface are located on the first mushroom valve, and the second valve stem and the second mushroom valve are located on the second mushroom valve.

6. The piston liquid hydrogen pump according to claim 3, wherein two liquid through holes are provided, and the first diameter-reducing step and the second diameter-reducing step are respectively located in the two liquid through holes; and
the mushroom valve assembly comprises a first mushroom valve and a second mushroom valve which are independent from each other, the first mushroom valve and the second mushroom valve are respectively arranged in the two liquid through holes, the first valve stem is located on the first mushroom valve, the second valve stem is located on the second mushroom valve, and the first valve stem and the second valve stem respectively extend out from the two liquid through holes in opposite directions.

7. The piston liquid hydrogen pump according to claim 1, wherein the driving part is provided with a first shaft seal, the hydraulic part is provided with a second shaft seal, the piston rod penetrates out of the driving part from the first shaft seal, and the piston rod penetrates out of the hydraulic part from the second shaft seal; and
the first shaft seal and the second shaft seal keep a distance along an axial direction of the piston rod, and a part of the piston rod located between the first shaft seal and the second shaft seal is exposed to form an exposed section.

8. The piston liquid hydrogen pump according to claim 1, further comprising a driving assembly, wherein the driving assembly comprises: a controller, a reversing valve, a hydraulic pump, a first hydraulic pipe, a second hydraulic pipe, a hydraulic tank and a pressure sensor; wherein
the first hydraulic pipe is communicated between the first driving liquid inlet/outlet and the hydraulic tank, and the second hydraulic pipe is communicated between the second driving liquid inlet/outlet and the hydraulic tank;
the reversing valve is located on both of the first hydraulic pipe and the second hydraulic pipe, the hydraulic pump and the pressure sensor are located on the first hydraulic pipe, and the pressure sensor is located at an outlet side of the hydraulic pump for detecting a pressure of the first hydraulic pipe;
an output end of the pressure sensor is in communication connection with an input end of the controller; and
an input end of the hydraulic pump and an input end of the reversing valve are in communication connection with an output end of the controller.

9. A hydrogen fueling system, comprising: a liquid hydrogen storage tank, a vaporizer, a buffer tank, a liquid hydrogen pipeline, a gaseous hydrogen pipeline, a gaseous hydrogen fueling machine, and the piston liquid hydrogen pump according to any one of claims 1 to 8; wherein
the piston liquid hydrogen pump is arranged in the liquid hydrogen storage tank; and
the liquid hydrogen pipeline is connected between the liquid hydrogen storage tank and the vaporizer, the gaseous hydrogen pipeline is connected between the vaporizer and the gaseous hydrogen fueling machine, and the buffer tank is located on the gaseous hydrogen pipeline.

10. The hydrogen fueling system according to claim 9, further comprising a liquid hydrogen fueling machine and an insulation liquid hydrogen pipeline; wherein
the insulation liquid hydrogen pipeline is connected between the liquid hydrogen storage tank and the liquid hydrogen fueling machine.

11. The hydrogen fueling system according to claim 9, further comprising a precooling part, wherein the precooling part comprises a precooling pipe and/or a heat exchanger; wherein
a hot end of the precooling pipe is connected to the gaseous hydrogen fuelinng machine, and the hot end of the precooling pipe is communicated with the liquid hydrogen storage tank, or communicated to a cold end of the vaporizer, or communicated to a pipeline located between the liquid hydrogen storage tank and the vaporizer; and
the heat exchanger comprises a hot flow pipeline and a cold flow pipeline which exchange heat, the hot flow pipeline is communicated with the gaseous hydrogen fueling machine, the cold flow pipeline is communicated with the liquid hydrogen storage tank, or communicated with the cold end of the vaporizer, or communicated with the pipeline located between the liquid hydrogen storage tank and the vaporizer.

12. The hydrogen fueling system according to claim 9, wherein a vent pipe is installed on the liquid hydrogen storage tank, and a safety valve is arranged on the vent pipe; wherein
the hydrogen fueling system further comprises a pressurization pipeline which is connected between the vaporizer and the liquid hydrogen storage tank through a control valve.

13. The hydrogen fueling system according to claim 9, wherein at least two piston liquid hydrogen pumps are provided, and the at least two piston liquid hydrogen pumps are arranged in the liquid hydrogen storage tank.
